(19) Europäisches Patentamt

European Patent Office

Office européen des brevets

(11) EP 1 711 005 A2

(12) **EUROPEAN PATENT APPLICATION**

(43) Date of publication:
11.10.2006 Bulletin 2006/41

(51) Int Cl.:
H04N 5/232 (2006.01)   G03B 5/00 (2006.01)
G02B 27/64 (2006.01)

(21) Application number: 06007224.6

(22) Date of filing: 05.04.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 08.04.2005 JP 2005112676

(71) Applicant: Fujinon Corporation
Saitama-shi,
Saitama (JP)

(72) Inventor: Higurashi, Aiko
Saitama-shi
Saitama (JP)

(74) Representative: Klunker . Schmitt-Nilson . Hirsch
Winzererstrasse 106
80797 München (DE)

(54) **Image blurring correcting apparatus**

(57) To provide an image blurring correcting apparatus capable of reducing a correction amount by adequate time change from an intended point in time by changing a value used in a formula for calculating the correction amount in the case of stopping image blurring correction and resetting the correction amount (actual correction amount) to 0 on occasions such as exceeding a correctable range. A CPU (18) calculates with a digital filter the correction amount for correcting image blurring with a vibration-proof lens (26) based on an angular velocity signal (angular velocity value) obtained from an angular velocity sensor (10). In the case where the correction amount continuously exceeds an upper limit of a correction range over a certain period of time, it changes delay values used by the digital filter.

FIG.1

**Description**

BACKGROUND OF THE INVENTION

Field of the Invention

The present invention relates to an image blurring correcting apparatus, and in particular, to the image blurring correcting apparatus which corrects (prevents) image blurring of a camera and the like due to a vibration.

Description of the Related Art

There is a known image blurring correcting apparatus of a TV camera wherein a vibration-proof lens is movably placed in a plane orthogonal to an optical axis in a photographing optical system and if the camera (photographing optical system of the camera) is vibrated, the vibration-proof lens is driven by an actuator to counteract image blurring due to the vibration and correct it (refer to Japanese Patent Application Laid-Open Nos. 2001-142103 and 2003-107554 for instance). There is also a known method of correcting the image blurring other than using the vibration-proof lens moving in the plane orthogonal to the optical axis. Either image blurring correcting method comprises an image displacing device which optically or electronically displaces an imaging position of an image formed by the optical system horizontally or vertically within an imaging surface. And image blurring correction is performed by controlling an amount of image displacement by the image displacing device to counteract the image blurring. In this specification, a correction amount means an amount corresponding to the amount of image displacement by the image displacing device and in the case of using the vibration-proof lens, the displacement amount of the vibration-proof lens is equivalent to the correction amount.

The correction amount for counteracting the image blurring for a vibration applied to the camera is calculated, for instance, based on a blurring signal outputted from a blurring detecting sensor such as an angular velocity sensor after detecting the vibration applied to the camera with the blurring detecting sensor.

SUMMARY OF THE INVENTION

There are the cases where, when the vibration is extremely high or a pan/tilt operation is performed, a magnitude of the correction amount calculated therefor exceeds a correction limit (upper limit of a correctable range (correction range)). In the case where such a state continues to an extent, it is desirable to stop the image blurring correction once and reset the correction amount to 0 to be able to restart the image blurring correction properly. In the case of the image blurring correcting apparatus using the vibration-proof lens for instance, resetting the correction amount to 0 is equivalent to resetting the vibration-proof lens to a central position (reference position) of a displaceable range. As for a method of resetting the correction amount to 0 comfortably, gradually and by an easy process, it is thinkable, for instance, to virtually input a blurring signal in a non-vibrational state (signal of a value 0) to an arithmetic processing portion for inputting the blurring signal obtained from the blurring detecting sensor and calculating the correction amount (to have the blurring signal in the non-vibrational state inputted).

However, in the case where the magnitude of the correction amount calculated based on the blurring signal by the arithmetic processing portion (hereafter, referred to as a calculated correction amount) exceeds the upper limit of the correction range, the magnitude of the correction amount actually reflected on the image blurring correction (hereafter, referred to as an actual correction amount) is the upper limit of the correction range. There is no limit to the magnitude of the calculated correction amount calculated by the arithmetic processing portion. Even in the case where the magnitude of the calculated correction amount exceeds the upper limit of the correction range, it is desirable, if that state is short (not continuing over a predetermined time), to change the actual correction amount and restart the image blurring correction at a point in time when the magnitude of the calculated correction amount becomes smaller than the upper limit of the correction range. For that reason, it is necessary to calculate the calculated correction amount as per normal based on the blurring signal even after the magnitude of the calculated correction amount exceeds the upper limit of the correction range. For such a reason, there arises a state of discrepancy between the calculated correction amount and the actual correction amount.

Thus, it is assumed that a certain period of time has elapsed in the state in which the magnitude of the calculated correction amount calculated by the arithmetic processing portion is exceeding the upper limit of the correction range. In this case, even if the blurring signal in the non-vibrational state is virtually inputted to the arithmetic processing portion to reset the correction amount to 0, it takes time before the magnitude of the calculated correction amount exceeding the upper limit of the correction range is reduced to the upper limit of the correction range. Therefore, there is a problem that a start of reduction in the actual correction amount becomes later than the point in time intended to reset the actual correction amount to 0, and a degree of that delay is different and unpredictable depending on the state of the blurring signal up to the point in time of virtually inputting the blurring signal in the non-vibrational state.

The process of stopping the image blurring correction once and resetting (reducing) the actual correction amount to 0 as described above is not limited to the cases of a condition that the calculated correction amount has continued in the state of exceeding the upper limit of the correction range over a certain period of time. For instance, there are the cases where the blurring signal of the blurring detecting sensor gets saturated before the calculated correction amount reaches the upper limit of the correction range. Even in that case, it is desirable to stop the image blurring correction and reset the actual correction amount to 0 when that state continues over a certain period of time. Conventionally, there are the cases where, as the condition for determining that the pan/tilt operation is performed, the blurring signal should continue the state of exceeding a predetermined threshold over a certain period of time. When this condition is satisfied, the process of stopping the image blurring correction and resetting the actual correction amount to 0 is also performed.

As in these cases, the process of stopping the image blurring correction and resetting the actual correction amount to 0 is performed when the predetermined time for determination elapses in the state of having the predetermined threshold exceeded by the calculated correction amount or the blurring signal. It is assumed in any of these cases that the image blurring correction is stopped when the pan/tilt operation is performed. Therefore, it is desirable to reset the actual correction amount to 0 so that an image actually photographed on performing the pan/tilt operation will not give a sense of discomfort. In the case where the actual correction amount is changed as with the calculated correction amount after having the predetermined threshold exceeded by the calculated correction amount or the blurring signal, there is a problem that there arises unnaturalness such as a subject on a screen changing drastically on starting to reset the actual correction amount to 0 after elapse of a certain period of time in that state. For that reason, it is preferable to keep the actual correction amount fixed during the period from having the predetermined threshold exceeded by the calculated correction amount or the blurring signal to starting to reduce the actual correction amount to 0. If the calculated correction amount is calculated based on the blurring signal while keeping the actual correction amount at a fixed value, the calculated correction amount is different from the actual correction amount.

Even if the blurring signal in the non-vibrational state is virtually inputted to the arithmetic processing portion to reset the actual correction amount to 0 in the case where the calculated correction amount is different from the actual correction amount as above, there is a problem that, when the actual start of reduction in the actual correction amount becomes later than the point in time intended as described above or a past value of the blurring signal is reflected in the calculation of the correction amount (when calculating the correction amount by using a digital filter for instance), the actual correction amount cannot be reduced by adequate time change due to influence thereof.

The present invention has been made in view of these circumstances, and an object thereof is to provide an image blurring correcting apparatus capable of reducing the actual correction amount by adequate time change from the point in time intended in the case of stopping the image blurring correction and resetting the correction amount (actual correction amount) to 0.

To attain the object, an image blurring correcting apparatus according to a first aspect of the invention is characterized by comprising: a blurring detecting device which outputs a blurring signal according to a vibration applied to an optical system; an image displacing device which displaces an image formed by the optical system on an imaging surface; a correction amount calculating device which calculates a correction amount for image blurring correction corresponding to an amount of image displacement by the image displacing device necessary to counteract image blurring due to a vibration of the blurring signal based on an inputted blurring signal; a correction performing device which inputs the blurring signal outputted from the blurring detecting device to the correction amount calculating device and performs an image blurring correction by displacing the image with the image displacing device according to the correction amount calculated by the correction amount calculating device; a correction amount keeping device which keeps, while a magnitude of the blurring signal outputted by the blurring detecting device or a magnitude of the correction amount calculated by the correction amount calculating device has been exceeding a predetermined threshold in a state that the image blurring correction is performed by the correction performing device, an actual correction amount at a fixed value irrespective of the correction amount calculated by the correction amount calculating device; and a correction stopping device which calculates, assuming that, when a predetermined determination time elapses in a state that the magnitude of the blurring signal outputted by the blurring detecting device or the magnitude of the correction amount calculated by the correction amount calculating device has been exceeding the predetermined threshold in the case where the image blurring correction is performed by the correction performing device, a fixed correction amount kept by the correction amount keeping device is inputted to the correction amount calculating device before the determination time elapses, the correction amount with the correction amount calculating device by changing a value in a formula for calculating the correction amount of the correction amount calculating device and virtually inputting the blurring signal having been in a non-vibrational state since the elapse of the determination time to the correction amount calculating device, and displaces the image with the image displacing device according to the calculated correction amount.

According to the first aspect of the present invention, it is possible to start reducing the correction amount in reality (actual correction amount) adequately from the point in time of the elapse of the determination time and reduce the actual correction amount by adequate time change in the case of exerting control to keep the actual correction amount at a fixed value until the predetermined determination time elapses after the magnitude of the blurring signal or the correction amount exceeds the predetermined threshold and reduce the actual correction amount to be 0 once the determination time elapses.

An image blurring correcting apparatus according to a second aspect of the present invention is the invention according to the first aspect, wherein the correction amount calculating device calculates, if a correction amount calculated for an n-th sampling value $X_{in}$ of the inputted blurring signal is $Y_n$, and As, Bs and K are coefficients while N is an arbitrary integer, the correction amount $Y_n$ by using formulas (1) and (2) below, and

$$Y_n = \sum_{s=0}^{N} A_s \times W_{n-s} \qquad \ldots(1)$$

$$W_n = K \times X_{in} + \sum_{s=1}^{N} B_s \times W_{n-s} \qquad \ldots(2)$$

the correction stopping device changes, if the value of the actual correction amount kept constant by the correction amount keeping device is a, an initial value of Wn - s (s = 1, 2, 3, ..., N) of the formulas (1) and (2) according to following formula and sequentially calculates the correction amounts $Y_n$ by assigning the value 0 to the sampling value $X_{in}$ of the formula (2).

$$W_{n-s} = \frac{a}{\sum_{r=0}^{N} A_r}$$

The second aspect shows a concrete formula for calculating the correction amount with the correction amount calculating device and concrete processing contents of the correction stopping device therefor.

An image blurring correcting apparatus according to a third aspect of the invention is the invention according to the second aspect, wherein the correction stopping device changes at least one value of the coefficients As, Bs and K from the value on having the image blurring correction performed by the correction performing device. The third aspect is an aspect which reduces the actual correction amount by desired time change in the case of resetting the actual correction amount to 0.

An image blurring correcting apparatus according to a fourth aspect of the invention is the invention according to the first, second and third aspects, wherein a set-up threshold is a magnitude of the blurring signal when an output of the blurring detecting device is saturated against the blurring signal outputted by the blurring detecting device or an upper limit of a range within which the image blurring correction for the correction amount calculated by the correction amount calculating device can be performed. The fourth aspect shows a specific aspect of the threshold as the condition for stopping the image blurring correction and resetting the actual correction amount to 0.

According to the image blurring correcting apparatus of the present invention, it is possible to reduce the actual correction amount by adequate time change from the point in time intended in the case of stopping the image blurring correction and resetting the correction amount (actual correction amount) to 0.

BRIEF DESCRIPTION OF THE DRAWINGS

Fig. 1 is a block diagram showing a configuration of an image blurring correcting apparatus according to the present invention;
Fig. 2 is a diagram exemplifying a gain value according to a focal length on calculating a correction amount;
Fig. 3 is a diagram exemplifying a relation between the focal length and a magnitude of the correction amount under a fixed condition;
Fig. 4 is a diagram showing an example of a signal of the correction amount in the case of stopping image blurring correction and resetting it to 0; and
Fig. 5 is a flowchart showing a procedure of a CPU.

## DETAILED DESCRIPTION OF THE PREFERRED EMBODIMENTS

Hereunder, a preferred embodiment of an image blurring correcting apparatus of the present invention will be described in detail according to the attached drawings.

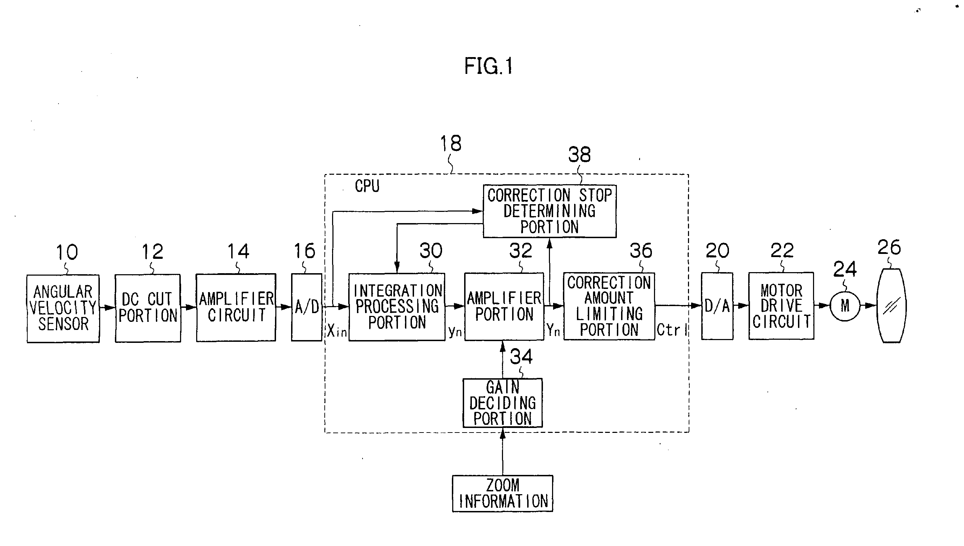

Fig. 1 is a block diagram showing a configuration of the image blurring correcting apparatus of the present invention. The image blurring correcting apparatus is mounted on a lens apparatus (photographing lens) for a TV camera, a movie camera, a still camera or the like. A vibration-proof lens 26 shown in Fig. 1 is placed in an optical system such as the lens apparatus or camera on which the apparatus of the present invention is mounted, and is placed to be movable right and left (horizontally) and up and down (vertically (perpendicularly)) within a plane perpendicular to an optical axis of the optical system. The vibration-proof lens 26 is driven horizontally or vertically by a motor 24. In the case where a vibration occurs to the camera (optical system), the vibration-proof lens 26 is moved to a position for correcting image blurring (position for counteracting the image blurring due to the vibration) by the motor 24. The vibration-proof lens 26 is driven likewise for the vibration occurring in either direction, that is, horizontally or vertically. Therefore, Fig. 1 only shows a configuration for performing image blurring correction in one direction (horizontally for instance), and the same configuration also applies to the other direction.

In Fig. 1, an angular velocity sensor 10 is a gyro sensor mounted as a blurring detecting sensor for detecting the vibration of the optical system, which is mounted on a top surface of a lens barrel or the like. The angular velocity sensor 10 outputs as an angular velocity signal (blurring signal) an electrical signal of a voltage according to an angular velocity of the vibration of the optical system generated horizontally for instance.

The angular velocity signal outputted from the angular velocity sensor 10 has a DC component (low-frequency component equal to or lower than a predetermined cutoff frequency) cut off by a DC cut portion (high-pass filter (HPF)) 12, and other frequency components pass the DC cut portion 12. The angular velocity signal having passed the DC cut portion 12 is amplified by an amplifier circuit 14 and then converted to a digital signal by an A/D converter 16 to be inputted to a CPU 18 as a value $X_{in}$ of the angular velocity signal.

As will be described in detail later, the CPU 18 integrates the angular velocity signal inputted as described above by arithmetic processing of a digital filter to convert it to an angle signal (position signal), and amplifies the angle signal with a gain value according to a focal length of the optical system. Thus, a correction amount for correcting image blurring is acquired. The CPU 18 outputs the acquired correction amount to a D/A converter 20 as a value of a control signal Ctrl indicating a moving target position of the vibration-proof lens 26.

The control signal outputted from the CPU 18 to the D/A converter 20 is converted to an analog signal by the D/A converter 20 and then inputted to a motor drive circuit 22. The motor drive circuit 22 drives a motor 24 for moving the vibration-proof lens 26 horizontally for instance to move the vibration-proof lens 26 to a position corresponding to a value of a control signal (correction amount) outputted from the CPU 18. Thus, the image blurring due to the vibration applied to the optical system is corrected.

Subsequently, processing of the CPU 18 will be described in detail. Fig. 1 shows the processing performed by the CPU 18 divided in processing blocks. The value $X_{in}$ of the angular velocity signal (angular velocity value) converted to the digital signal by the A/D converter 16 and sequentially inputted to the CPU 18 as described above is integrated first by the arithmetic processing of the digital filter of an integration processing portion 30. Thus, a value $Y_n$ (angle value) of the angle signal (position signal) is acquired from the angular velocity value $X_{in}$. The processing contents of the integration processing portion 30 will be described later.

The angle value $Y_n$ acquired by the integration processing portion 30 is subsequently amplified at a predetermined gain value $\alpha$ by an amplifier portion 32. It is thereby possible to acquire a correction amount $Y_n$ (calculated correction amount) for counteracting and correcting the image blurring caused by the vibration of the optical system, that is, a displacement amount of the vibration-proof lens 26 necessary to correct the image blurring.

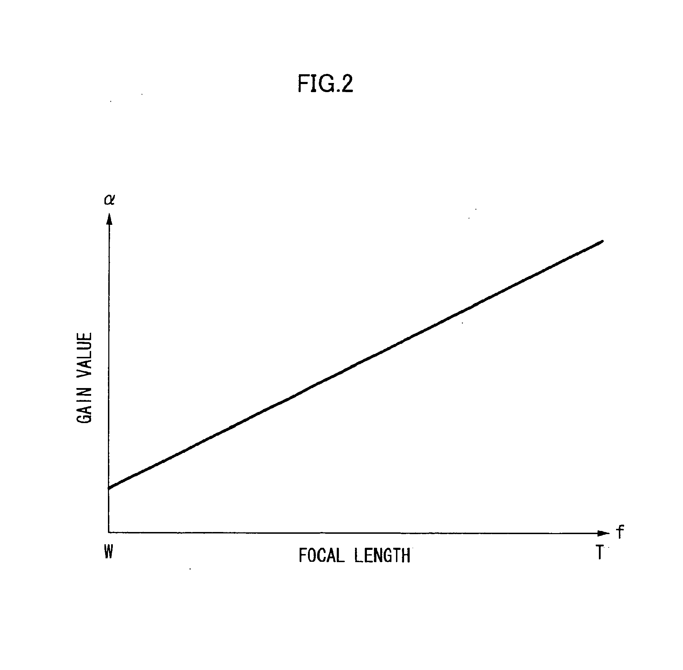

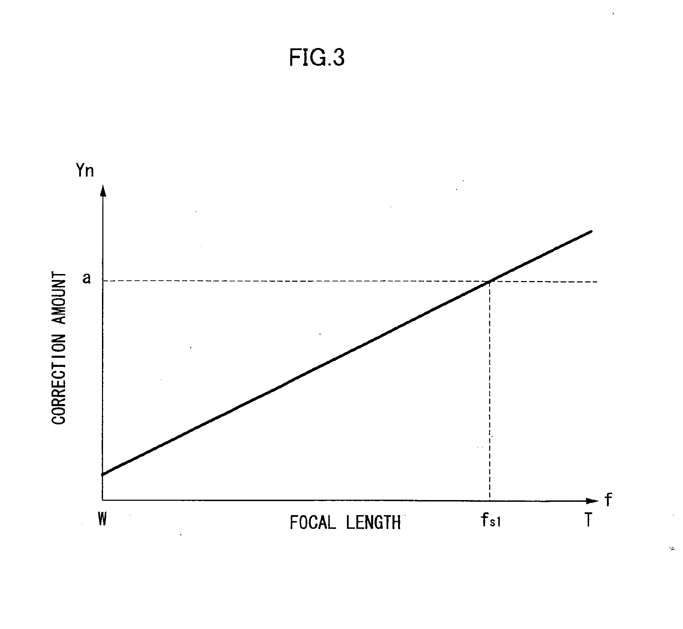

In the present embodiment, the optical system having the vibration-proof lens 26 placed therein is the optical system of a variable focal length capable of changing the focal length including a zoom function, where a magnitude of the image blurring caused by the vibration occurring to the optical system is different according to the focal length of the optical system. Therefore, the displacement amount of the vibration-proof lens 26 from a reference position for counteracting the image blurring (correction amount for counteracting and correcting the image blurring) is also different according to the focal length. Thus, the CPU 18 is provided with information on a currently set focal length (zoom information) by the lens apparatus, camera or the like on which the apparatus of the present invention is mounted. A gain deciding portion 34 decides the gain value according to the focal length based on the zoom information to set it as the gain value $\alpha$ of the amplification process of the amplifier portion 32. Fig. 2 is a diagram simply showing the magnitude of the gain value $\alpha$ (vertical axis) according to a focal length f (horizontal axis) of the optical system. As shown in Fig. 2, the gain value $\alpha$ becomes larger as the focal length f becomes longer, that is, as the focal length f gets closer to a tele-terminal, and becomes smaller as the focal length f becomes shorter, that is, as the focal length f gets closer to a wide-terminal. Fig. 3 is a diagram exemplifying the magnitude of the correction amount $Y_n$ acquired at a certain point in time by changing the focal length f. As shown in Fig. 3, the correction amount Yn becomes larger as the focal length f becomes longer and becomes smaller as the focal length f becomes shorter, which reflects a relation between the focal length f and the gain value $\alpha$ shown in Fig. 2.

Once the correction amount $Y_n$ is thus acquired by the amplifier portion 32, the correction amount $Y_n$ is limited to a value of a fixed range by a correction amount limiting portion 36. And a limited correction amount is outputted from the CPU 18 to the D/A converter 20 as the value of the control signal Ctrl (control value) indicating the moving target position of the vibration-proof lens 26. In Fig. 3, an upper limit of a correctable range (correction range) is indicated by a. For instance, the upper limit a is set to a fixed value irrespective of the focal length, and is set to a maximum value b in the correctable range as a preferred value, that is, a value in proximity (a value of 97 percent of the maximum value b for instance) to the displacement amount of the vibration-proof lens 26 at a mechanical-terminal. In the case where the magnitude of the correction amount $Y_n$ acquired by the amplifier portion 32 exceeds the upper limit a, the correction amount limiting portion 36 changes the magnitude of the correction amount $Y_n$ to the upper limit a and outputs the value thereof as the control signal Ctrl. In the case where the magnitude of the correction amount $Y_n$ is not exceeding the upper limit a, the correction amount limiting portion 36 outputs the correction amount $Y_n$ as-is as the control signal Ctrl. Thus, the vibration-proof lens 26 is displaced between the upper limit a and a lower limit (- a) of the correction range, and the correction amount actually reflected on the image blurring correction (actual correction amount), that is, the displacement amount of the vibration-proof lens 26 changes as the value in the correction range.

The correction amount $Y_n$ acquired by the amplifier portion 32 is given to a correction stop determining portion 38. Provided that a predetermined determination time period t1 has elapsed in a state of having the upper limit a of the correction range exceeded by the magnitude of the correction amount $Y_n$ as a correction stop condition (first correction stop condition), the correction stop determining portion 38 determines whether or not the first correction stop condition is satisfied. In the case where the first correction stop condition is satisfied, the correction stop determining portion 38 instructs the integration processing portion 30 to switch to a correction stop process for stopping the image blurring correction and resetting the correction amount $Y_n$ to 0. To be more specific, in the case where the magnitude of the correction amount $Y_n$ continuously exceeds the upper limit a of the correction range over the determination time period t1, the process of the integration processing portion 30 is changed to stop the image blurring correction once and reset the vibration-proof lens 26 to a center (reference position) of a movable range for reasons such as a high possibility of a pan/tilt operation being performed. Resetting the vibration-proof lens 26 to the reference position is equal to resetting the correction amount $Y_n$ to 0 and setting the control value Ctrl to 0.

Provided that the predetermined determination time period t1 has elapsed in a state of having a value (saturation value) gmax on saturation of output of the angular velocity sensor 10 exceeded by the magnitude of the angular velocity value $X_{in}$ inputted to the integration processing portion 30 as a correction stop condition (second correction stop condition), the correction stop determining portion 38 determines whether or not the second correction stop condition is satisfied. In the case where the second correction stop condition is satisfied, the correction stop determining portion 38 instructs the integration processing portion 30 to switch to the correction stop process as in the case where the first correction stop condition is satisfied. The determination time period t1 in this case is the same time period as the determination time period t1 in the case where the magnitude of the correction amount $Y_n$ exceeds the upper limit a of the correction range. However, it does not always have to be the same.

Thus, in the case where the angular velocity value $X_{in}$ continuously exceeds the saturation value gmax over the determination time period t1, the process of the integration processing portion 30 is changed to stop the image blurring correction once and reset the vibration-proof lens 26 to the center (reference position) of the movable range for the reasons such as a high possibility of a pan/tilt operation being performed. As shown in Fig. 3, even if the state of the vibration is the same, the correction amount $Y_n$ becomes smaller as the focal length of the optical system becomes shorter, and the correction amount $Y_n$ becomes larger as the focal length becomes longer. Therefore, even in the case where the magnitude of the correction amount $Y_n$ has not reached the upper limit a, it is apt to happen that the output of the angular velocity sensor 10 gets saturated on the wide side. In the case where the output of the angular velocity sensor 10 gets saturated, there is a high possibility of a pan/tilt operation being performed even if the correction amount $Y_n$ has not reached the upper limit a. For that reason, the image blurring correction is stopped and the correction amount $Y_n$ is reset to 0 in the case where the value of the angle signal on the saturation of output of the angular velocity sensor 10 is the saturation value gmax and the predetermined determination time period t1 has elapsed in the state of having the saturation value gmax exceeded by the magnitude of the angular velocity value $X_{in}$ inputted to the integration processing portion 30.

Next, the processing of the integration processing portion 30 will be described. The integration processing portion 30 performs the following integration process to the angular velocity values $X_{in}$ inputted (sampled) sequentially with the digital filter. First, the latest angular velocity value $X_{in}$ of the angular velocity values $X_{in}$ inputted sequentially is an input value sampled n-th whereas an angle value acquired by the integration process is $y_n$. In this case, the angle

value $y_n$ is calculated by the following formula using coefficients $A_0$, $A_1$ and $A_2$.

$$y_n = A_0 \times W_n + A_1 \times W_{n-1} + A_2 \times W_{n-2} \quad ...(3)$$

However, a delay value $W_n$ ($n = 1, 2, 3 ...$) is a value acquired by the following formula using coefficients K, $B_1$ and $B_2$.

$$W_n = K \times X_{in} + B_1 \times W_{n-1} + B_2 \times W_{n-2} \quad ...(4)$$

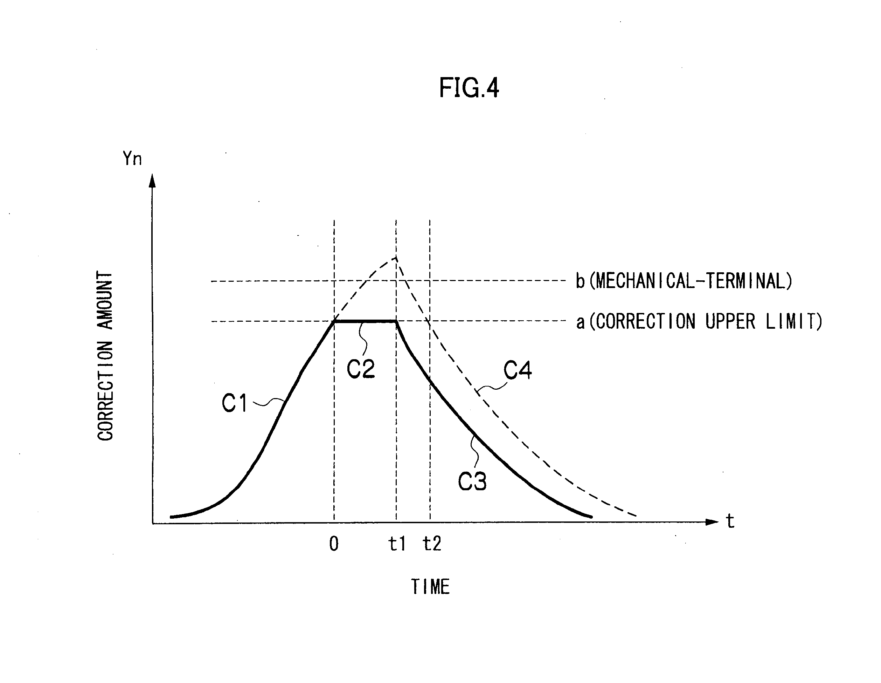

In the case where the image blurring correction is being performed, the angle value $y_n$ is acquired by using the formulas (3) and (4) and is outputted to the amplifier portion 32 each time a new angular velocity value $X_{in}$ is inputted. The newly acquired delay value $W_n$ and a delay value $W_{n-1}$ used on acquiring the delay value $W_n$ are stored as the delay values $W_{n-1}$ and $W_{n-2}$ to be used for calculation on having a next angular velocity value $X_{in}$ inputted respectively.
Now, as to the angular velocity values $X_{in}$ inputted sequentially, a signal of the correction amount $Y_n$ indicated by a curve C1 shown in Fig. 4 is obtained by the integration processing portion 30 and amplifier portion 32. According to the curve CI, the upper limit a of the correction range is exceeded from a certain point in time. Thus, if the point in time when the correction amount $Y_n$ exceeds the upper limit a is 0 (t = 0), the control value Ctrl outputted by the correction amount limiting portion 36 from the point in time 0 is a fixed upper limit as shown by a straight line C2. In this case, the correction amount $Y_n$ and the control value Ctrl are different values. Subsequently, in the case where just the determination time period t1 elapses from the point in time t = 0 in the state of having the upper limit a exceeded by the correction amount $Y_n$, the correction stop determining portion 38 provides an instruction to switch to the correction stop process at the point in time (t = t1).
If the instruction to switch to the correction stop process is provided, the integration processing portion 30 changes the delay values $W_{n-1}$ and $W_{n-2}$ of the formula (4) to the value represented by the following formula.

$$W_n = W_{n-1} = W_{n-2} = \frac{a}{(A_0 + A_1 + A_2) \times \alpha} \quad ...(5)$$

To be more specific, it is $W_n = W_{n-1} = W_{n-2}$ assuming that the angular velocity values $X_{in}$ for setting the correction amount $Y_n$ obtained by the integration processing portion 30 and amplifier portion 32 constantly to the upper limit a have been inputted so far. The formula (5) is derived by applying this relation ($W_n = W_{n-1} = W_{n-2}$) to the formula (3) and assigning a value a/$\alpha$ ($\alpha$ is the gain value) before the amplification in the amplifier portion 32 to the angle value $y_n$. It is thereby possible to change the values of the delay values $W_{n-1}$ and $W_{n-2}$ used in the formula (4) and calculate the correction amount $Y_n$ by inputting a new angular velocity value $X_{in}$ and using the formulas (3) and (4) (and the gain value $\alpha$) so as to acquire a new correction amount $Y_n$ from the state as if the correction amount $Y_n$ has constantly been the upper limit a.
If the delay values $W_{n-1}$ and $W_{n-2}$ are changed as described above, the angle value $y_n$ is calculated by the formulas (3) and (4) considering that the angular velocity values $X_{in}$ of 0 in the case of assuming that no image blurring has occurred since a point in time t1 is virtually inputted to the integration processing portion 30. Thus, as indicated by a curve C3 of Fig. 4, the correction amount $Y_n$ starts to be reduced to be 0 from the point in time t1 and also starts to be reduced from the upper limit a as with the control value Ctrl. Therefore, the control value Ctrl also starts to be reduced as indicated by the curve C3, and the displacement amount of the vibration-proof lens 26 starts to be reduced from the point in time t1 at which it is intended to reset the vibration-proof lens 26 to the reference position. And the control value Ctrl gradually gets close to 0 by the intended time change (time change decided by the coefficients $A_0$, $A_1$, $A_2$, K, $B_1$ and $B_2$) so that the vibration-proof lens 26 is eventually reset to the reference position.
If the angle value $y_n$ is calculated by the formulas (3) and (4) considering that the angular velocity value $X_{in}$ of 0 is simply inputted without changing the delay values $W_{n-1}$ and $W_{n-2}$, the correction amount $Y_n$ thereby obtained is as indicated by the curve C4 of Fig. 4. In this case, the correction amount $Y_a$ is not reduced to the upper limit a until a point in time t2, and so the control value Ctrl actually starts to be reduced from the point in time t2 onward. Therefore, a delay arises from the point in time t1 at which it is intended to reset the vibration-proof lens 26 to the reference position to the point in time t2 at which it actually starts to be reset, where the delay time is uncertain. For this reason, such a process is not desirable. There is also a possibility that the time change while the correction amount $Y_n$ is reduced may not be as intended because it is changed by the delay values $W_{n-1}$ and $W_{n-2}$ acquired before the point in time t1.
The processing of the integration processing portion 30 and amplifier portion 32 is performed collectively by the arithmetic processing of the CPU 18, and an element of the gain value $\alpha$ of the amplifier portion 32 is included in the coefficients $A_0$, $A_1$, $A_2$, K, $B_1$ and $B_2$ of the formulas (3) and (4) so that the correction amount $Y_n$ can be acquired by the formulas (3) and (4). The formulas (3) and (4) are secondary filter calculations but may also be the calculations of another order. The formulas generalizing and representing the formulas (3), (4) and (5) in consideration of the above are the following formulas (6), (7) and (8).

$$Y_n = \sum_{s=0}^{N} A_s \times W_{n-s} \qquad \qquad ...(6)$$

$$W_n = K \times X_{in} + \sum_{s=1}^{N} B_s \times W_{n-s} \qquad \qquad ...(7)$$

$$W_{n-s} = \frac{a}{\sum_{r=0}^{N} A_r} \qquad \qquad ...(8)$$

It is also possible to change the values of coefficients As, Bs and K in addition to the delay values $W_{n-1}$ and $W_{n-2}$ on stopping the image blurring correction so as to reduce the correction amount $Y_n$ by desired time change.

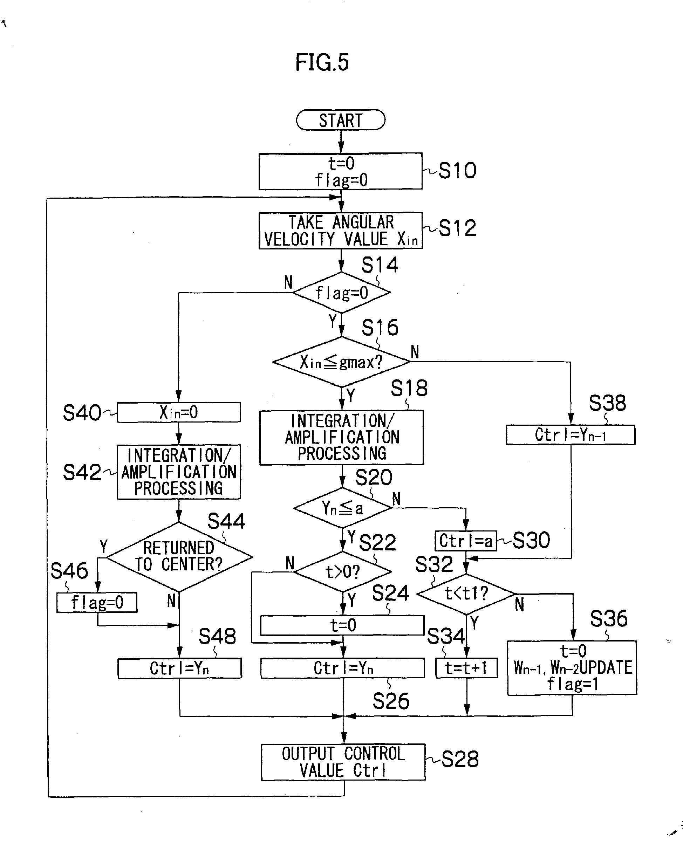

Next, a description will be given by using a flowchart of Fig. 5 as to a procedure of the CPU 18 for performing the above-mentioned processing. First, the CPU 18 initializes a variable t indicating time length and a variable flag indicating whether to perform or stop the image blurring correction to 0 (step S 10). The CPU 18 subsequently takes the value of the angular velocity signal (angular velocity value) $X_{in}$ outputted from the angular velocity sensor 10 (step S12). And the CPU 18 determines whether or not the variable flag is 0 (step S 14). If determined as YES, that is, in the case of effectively performing the image blurring correction, the CPU 18 subsequently determines whether or not the magnitude of the angular velocity value $X_{in}$ taken in the step S12 is the saturation value gmax on saturation of the output of the angular velocity sensor 10 or less (step S16). If determined as YES, the integration processing portion 30 and amplifier portion 32 perform the integration process and amplification process as described as the processing on performing the image blurring correction so as to calculate the correction amount $Y_n$ (step S 18).

Next, the CPU 18 determines whether or not the magnitude of the correction amount $Y_n$ calculated in the step S 18 is the value of the upper limit a of the correction range or less (step S20). If determined as YES, the CPU 18 determines whether or not the variable t indicating the time length is larger than 0 (different from 0) (step S22). If determined as YES, it sets the variable t to 0 (step S24). If determined as NO, it does not perform the process of the step S24.

Subsequently, the CPU 18 sets the correction amount $Y_n$ acquired in the step S 18 as the control value Ctrl (step S26). The CPU 18 outputs the set control value Ctrl to the D/A converter 20 and thereby moves the vibration-proof lens 26 to the position of the control value Ctrl (step S28), and the process returns to the step S12.

If determined as NO in the step S20, that is, in the case where the magnitude of the correction amount $Y_n$ exceeds the value of the upper limit a, the CPU 18 sets the upper limit a as the control value Ctrl (step S30). Subsequently, it determines whether or not the variable t is less than the value t1 corresponding to the predetermined determination time period t1 (step S32). If determined as YES in the step S32, the CPU 18 adds 1 to the variable t (step S34). To be more specific, it becomes t = t + 1.

If determined as NO in the step S32, that is, in the case where the predetermined determination time period t1 elapses in the state of having the upper limit a exceeded by the magnitude of the correction amount $Y_n$, the CPU 18 resets the variable t to 0 and changes the delay values $W_{n-1}$ and $W_{n-2}$ of the formula (3) used for the integration process to the value of $a/((A_0 + A_1 + A_2) \cdot \alpha)$ as indicated in the formula (5). The gain value $\alpha$ is decided by the focal length of the optical system obtained from the zoom information. It also sets the variable flag to 1 and moves on to the process of stopping the image blurring correction (step S36). On finishing the process of the step S34 or the step S36, it then outputs the control value Ctrl set to the upper limit a in the step S36 to the D/A converter 20 (step S28), and the process returns to the step S12.

If determined as NO in the step S16, that is, in the case where the magnitude of the angular velocity value $X_{in}$ exceeds the saturation value gmax on saturation of the output of the angular velocity sensor 10, it sets the control value Ctrl to the correction amount $Y_{n-1}$ calculated last time (step S38). Subsequently, it determines whether or not the variable t is less than the predetermined determination time period t1 (step S32). If determined as YES here, it adds 1 to the variable t (step S34).

If determined as NO in the step S32, that is, in the case where the fixed time period t1 elapses in the state of having the saturation value gmax exceeded by the magnitude of the angular velocity value $X_{in}$, the CPU 18 resets the variable t to 0 and changes the delay values $W_{n-1}$ and $W_{n-2}$ of the formula (3) used for the integration process to the value of $a/((A_0 + A_1 + A_2) \cdot \alpha)$ as indicated in the formula (5). It also sets the variable flag to 1 and moves on to the process of stopping the image blurring correction (step S36). On finishing the process of the step S34 or the step S36, it outputs the control value Ctrl set to the correction amount $Y_{n-1}$ in the step S38 to the D/A converter 20 (step S28), and the process returns to the step S 12.

In the case of setting the variable flag to 1 and moving on to the process of stopping the image blurring correction in the step S36, it is determined as NO in the step S 14. In this case, the CPU 18 sets the angular velocity value $X_{in}$ to 0 (step S40). And the integration processing portion 30 and amplifier portion 32 perform the integration process and amplification process as described as the processing so as to calculate the correction amount $Y_n$ (step S42). Subsequently, it determines whether or not the calculated correction amount $Y_n$ has become 0, that is, whether or not the vibration-proof lens 26 has returned to the central position (reference position) (step S44). If determined as YES, it sets the variable flag to 0 and determines as YES, that is, determines to perform the image blurring correction in the determination process of the next step S 14 (step S46). If determined as NO in the step S44, the process of the step S46 is not performed.

Next, the CPU 18 sets the correction amount $Y_n$ calculated in the step S42 as the control value Ctrl (step S48). The CPU 18 outputs the control value Ctrl to the D/A converter 20 (step S28), and the process returns to the step S12. The processing of the steps S40 to S48 and the step S28 is repeated while the variable flag is 1 so as to return the vibration-proof lens 26 to the reference position gradually.

As described above, the embodiment uses an image displacing device which intentionally displaces an imaging position of the image formed by the optical system horizontally or vertically in an imaging surface by displacing the vibration-proof lens 26, and displaces the image with the image displacing device to counteract the image blurring due to the vibration applied to the optical system so as to correct the image blurring. The image displacing device which thus displaces the image intentionally does not always have to use the vibration-proof lens as in this embodiment. For instance, it may also be the image displacing device which intentionally displaces the image by displacing an image pickup device of the camera and displacing an imaging range for effectively taking an image for recording or reproduction. It may also be an electronic image displacing device which intentionally displaces the image by displacing the range for cutting an image signal for recording or reproduction from the range of a shot image taken by the image pickup device of the camera. Even in the cases of such image blurring correction by the other methods, it is possible, by performing the integration and amplification processes and the like to the angular velocity signal obtained from the angular velocity sensor 10, to calculate the correction amount corresponding to the amount of intentional displacement of the image by the image displacing device necessary to counteract the image blurring as in this embodiment so as to apply the present invention as in the embodiment.

In the above-described embodiment, the condition for stopping the image blurring correction and resetting the correction amount (actual correction amount) to 0 is to satisfy either the case where the magnitude of the correction amount calculated as the amount necessary to correct the image blurring exceeds the value of the upper limit a of the correction range over a certain period of time or the case where the magnitude of the angular velocity signal (blurring signal) outputted from the angular velocity sensor 10 exceeds the saturation value gmax. However, the present invention is also applicable to the cases of stopping the image blurring correction under only one of the conditions. The present invention is also applicable to the case where a threshold such as the upper limit a or the saturation value gmax is set to another arbitrary value.

The embodiment described the case of detecting the vibration applied to the optical system with the angular velocity sensor and calculating the correction amount based on the angular velocity signal outputted from the angular velocity sensor. However, the present invention is also applicable to the cases of detecting the vibration applied to the optical system with a blurring detecting device other than the angular velocity sensor such as an angular acceleration sensor, an acceleration sensor, a velocity sensor, an angular movement sensor or a displacement sensor and calculating the correction amount based on the blurring signal outputted from the blurring detecting device correspondingly to the vibration.

**Claims**

1. An image blurring correcting apparatus, **characterized by** comprising:

   a blurring detecting device (10, 12, 14, 16, 18) which outputs a blurring signal according to a vibration applied to an optical system;

an image displacing device (20, 22, 24, 26) which displaces an image formed by the optical system on an imaging surface;

a correction amount calculating device (18) which calculates a correction amount for an image blurring correction corresponding to an amount of image displacement by the image displacing device (20, 22, 24, 26) necessary to counteract image blurring due to a vibration of the blurring signal based on an inputted blurring signal;

a correction performing device (18) which inputs the blurring signal outputted from the blurring detecting device (10, 12, 14, 16, 18) to the correction amount calculating device (18) and performs an image blurring correction by displacing the image with the image displacing device (20, 22, 24, 26) according to the correction amount calculated by the correction amount calculating device (18);

a correction amount keeping device (18) which keeps, while a magnitude of the blurring signal outputted by the blurring detecting device (10, 12, 14, 16, 18) or a magnitude of the correction amount calculated by the correction amount calculating device (18) has been exceeding a predetermined threshold in a state that the image blurring correction is performed by the correction performing device (18), an actual correction amount at a fixed value irrespective of the correction amount calculated by the correction amount calculating device (18); and

a correction stopping device (18) which calculates, assuming that, when a predetermined determination time elapses in a state that the magnitude of the blurring signal outputted by the blurring detecting device (10, 12, 14, 16, 18) or the magnitude of the correction amount calculated by the correction amount calculating device (18) has been exceeding the predetermined threshold in the case where the image blurring correction is performed by the correction performing device (18), a fixed correction amount kept by the correction amount keeping device (18) is inputted to the correction amount calculating device (18) before the determination time elapses, the correction amount with the correction amount calculating device (18) by changing a value in a formula for calculating the correction amount of the correction amount calculating device (18) and virtually inputting the blurring signal having been in a non-vibrational state since the elapse of the determination time to the correction amount calculating device (18), and displaces the image with the image displacing device (20, 22, 24, 26) according to the calculated correction amount.

2. The image blurring correcting apparatus according to claim 1, wherein
the correction amount calculating device (18) calculates, if a correction amount calculated for an n-th sampling value Xin of the inputted blurring signal is Yn, and As, Bs and K are coefficients while N is an arbitrary integer, the correction amount Yn by using formulas (1) and (2) below, and

$$Y_n = \sum_{s=0}^{N} A_s \times W_{n-s} \qquad \ldots(1)$$

$$W_n = K \times X_{in} + \sum_{s=1}^{N} B_s \times W_{n-s} \qquad \ldots(2)$$

the correction stopping device (18) changes, if the value of the actual correction amount kept constant by the correction amount keeping device (18) is a, an initial value of Wn - s (s = 1, 2, 3, ..., N) of the formulas (1) and (2) according to following formula and sequentially calculates the correction amounts Yn by assigning the value 0 to the sampling value $X_{in}$ of the formula (2).

$$W_{n-s} = \frac{a}{\sum_{r=0}^{N} A_r}$$

3. The image blurring correcting apparatus according to claim 2, wherein
the correction stopping device (18) changes at least one value of the coefficients As, Bs and K from the value on having the image blurring correction performed by the correction performing device (18).

4. The image blurring correcting apparatus according to claim 1, 2 or 3, wherein

a set-up threshold is a magnitude of the blurring signal when an output of the blurring detecting device (10, 12, 14, 16, 18) is saturated against the blurring signal outputted by the blurring detecting device (10, 12, 14, 16, 18) or an upper limit of a range within which the image blurring correction for the correction amount calculated by the correction amount calculating device (18) can be performed.

FIG.1

FIG.2

# FIG.3

# FIG.4

# FIG.5

```
                    ( START )
                        │
                        ▼
              ┌──────────────────┐
              │       t=0        │~S10
              │     flag=0       │
              └──────────────────┘
                        │
                        ▼
              ┌──────────────────┐
              │   TAKE ANGULAR   │~S12
              │ VELOCITY VALUE Xin│
              └──────────────────┘
                        │
                        ▼  S14
            N      ◇────────────◇
         ┌─────────│   flag=0   │
         │         ◇────────────◇
         │              │ Y    S16
         │              ▼
         │         ◇────────────◇      N
         │         │  Xin≦gmax? │─────────────┐
         │         ◇────────────◇             │
         │              │ Y   S18             │ S38
  ┌──────────┐    ┌──────────────┐      ┌────────────┐
S40~│  Xin=0   │   │ INTEGRATION/ │     │ Ctrl=Yn-1  │
  └──────────┘    │ AMPLIFICATION│      └────────────┘
       │          │  PROCESSING  │             │
       ▼          └──────────────┘             │
  ┌──────────┐          │  S20                 │
  │INTEGRATION/│        ▼                      │
S42~│AMPLIFICATION│ ◇────────────◇   N          │
  │ PROCESSING │  │   Yn≦a     │──────┐        │
  └──────────┘    ◇────────────◇      │        │
       │    S44        │ Y        ┌─────────┐  │
       ▼               ▼  S22     │ Ctrl=a  │~S30│
    ◇────────────◇   ◇──────◇ N   └─────────┘  │
  Y │  RETURNED  │   │ t>0? │─┐   S32│         │
 ┌──│ TO CENTER? │   ◇──────◇ │ ◇────────◇    │
 │  ◇────────────◇      │ Y   │ │ t<t1?  │────┤ N
S46│       │ N          ▼  S24│ ◇────────◇    │
┌──────┐   │         ┌──────┐ │    │ Y S34    │  S36
│flag=0│   │         │ t=0  │ │    ▼        ┌──────────────┐
└──────┘   │         └──────┘ │ ┌──────┐   │     t=0      │
   │       │  S48       │S34  │ │t=t+1 │   │Wn-1,Wn-2 UPDATE│
   ▼       ▼            ▼     │ └──────┘   │   flag=1     │
┌──────────┐        ┌──────────┐  │        └──────────────┘
│ Ctrl=Yn  │        │ Ctrl=Yn  │  │              │
└──────────┘        └──────────┘  │              │
      │                  │  S26   │              │
      └──────────────────┴────────┴──────────────┘
                        │
                        ▼
              ┌──────────────────┐
              │ OUTPUT CONTROL   │~S28
              │   VALUE Ctrl     │
              └──────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001142103 A

- JP 2003107554 A